# EUROPÄISCHE PATENTANMELDUNG

(11) **EP 4 725 896 A1**
(43) Veröffentlichungstag der Anmeldung: **15.04.2026**
(21) Anmeldenummer: 24020309.1
(22) Anmeldetag: 10.10.2024
(51) Int. Cl.: C01B 3/34, C01B 3/38

(54) **VERFAHREN UND ANLAGE ZUR HERSTELLUNG EINES WASSERSTOFF ENTHALTENDEN VERFAHRENSPRODUKTS**

(71) Anmelder: Linde GmbH, 82049 Pullach (DE)
(72) Erfinder: Behrens, Axel, 82049 Pullach (DE); Bohn, Jan-Peter, 82049 Pullach (DE); Müller-Thorwart, Ole, 82049 Pullach (DE); Reinke, Michael, 82049 Pullach (DE)
(74) Vertreter: Fischer, Werner

(57) **Zusammenfassung**

Es wird ein Verfahren zur Herstellung eines zumindest Wasserstoff enthaltenden Verfahrensprodukts (6) unter Verwendung einer Reformieranordnung (20) mit einer ersten zur Dampfreformierung eingerichteten Reformiereinheit (21) und einer, zur ersten seriell angeordneten zweiten zur Dampfreformierung eingerichteten Reformiereinheit (22) vorgeschlagen. Das Verfahren umfasst das Einspeisen eines ersten Einsatzstroms (7) in die erste Reformiereinheit (21) und das Einspeisen eines zweiten Einsatzstroms (8) in die zweite Reformiereinheit (22), wobei der erste Einsatzstrom (7) unter Verwendung eines ersten Einsatzmaterials (1) gebildet wird, wobei der zweite Einsatzstrom (8) unter Verwendung eines zweiten Einsatzmaterials (5), und eines Gasgemischs, das der ersten Reformiereinheit (21) entnommen wird, gebildet wird, wobei das zweite Einsatzmaterial (5) der Reformieranordnung (20) an einer Position stromab der ersten Reformiereinheit (21) und stromauf der zweiten Reformiereinheit (22) zugespeist wird. Das zweite Einsatzmaterial (5) weist denselben oder einen geringeren Gehalt an Methan und denselben oder einen höheren Gehalt an Kohlenwasserstoffen mit zwei und mehr Kohlenstoffatomen und/oder an Kohlendioxid auf als das erste Einsatzmaterial (1). Eine entsprechende Anlage (100) wird ebenfalls vorgeschlagen.

## Beschreibung

### Gebiet

Die vorliegende Offenbarung betrifft ein Verfahren und eine Anlage zur Herstellung eines Wasserstoff enthaltenden Verfahrensprodukts.

### Hintergrund

Die Wasserstoffherstellung im industriellen Maßstab basiert derzeit hauptsächlich auf Kohlenwasserstoffen und umfasst beispielsweise die Dampfreformierung von Erdgas. Anstelle einer Erläuterung des bereits Bekannten wird auf einschlägige Fachliteratur wie die Artikel "Gas Production, 2. Processes" und "Hydrogen, 2. Production" in Ullmann's Encyclopedia of Industrial Chemistry (2012) verwiesen.

Wasserstoff wird in entsprechenden Verfahren als Teil von sogenanntem Synthesegas gewonnen, das neben Wasserstoff insbesondere Kohlendioxid und/oder Kohlenmonoxid aufweist, wobei die Gehalte an Wasserstoff und Kohlenmonoxid durch eine Wassergaskonvertierung wechselseitig eingestellt werden können. Hier vorgeschlagene Ausgestaltungen können die Herstellung von Synthesegas oder von Wasserstoff als Endprodukt umfassen, so dass im Folgenden von einem "Wasserstoff enthaltenden Verfahrensprodukt" gesprochen wird.

Bei der industriellen Herstellung von Wasserstoff aus kohlenstoffhaltigen Einsatzstoffen mittels Dampfreformierung, aber auch bei anderen Verfahren zur Herstellung von Verfahrensprodukten, bei denen ein Brennstoff zur Beheizung von Reaktoren verfeuert wird, besteht der Wunsch nach einer Dekarbonisierung. Daher wurde eine elektrische Beheizung bei der Dampfreformierung vorgeschlagen.

Es besteht der Bedarf nach Verbesserungen bei der Herstellung von Wasserstoff unter Verwendung einer elektrisch beheizten Dampfreformierung.

### Übersicht

Vor diesem Hintergrund werden ein Verfahren und eine Anlage mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren dient zur Herstellung eines Wasserstoff enthaltenden Verfahrensprodukts. Es wird unter Verwendung einer Reformieranordnung mit einer ersten zur Dampfreformierung eingerichteten Reformiereinheit und einer, zur ersten seriell angeordneten zweiten zur Dampfreformierung eingerichteten Reformiereinheit durchgeführt. Es sei aber betont, dass das vorgeschlagene Verfahren und seine Ausgestaltungen nicht auf die Verwendung von nur zwei Reformiereinheiten beschränkt ist, sondern beliebig auf mehr als zwei seriell angeordnete Reformiereinheiten erweiterbar ist, wobei die nachfolgenden Erläuterungen entsprechend gelten.

Das Verfahren umfasst das Einspeisen eines ersten Einsatzstroms in die erste Reformiereinheit und das Einspeisen eines zweiten Einsatzstroms in die zweite Reformiereinheit, wobei der erste Einsatzstrom unter Verwendung eines ersten Einsatzmaterials und der zweite Einsatzstrom unter Verwendung eines zweiten Einsatzmaterials sowie eines der ersten Reformiereinheit entnommen Gasgemischs gebildet wird, wobei zumindest ein Teil des zweiten Einsatzmaterials der Reformieranordnung an einer Position stromab der ersten Reformiereinheit und stromauf der zweiten Reformiereinheit zugespeist wird, und wobei das zweite Einsatzmaterial denselben oder einen geringeren Gehalt an Methan und denselben oder einen höheren Gehalt an Kohlenwasserstoffen mit zwei und mehr Kohlenstoffatomen und/oder an Kohlendioxid aufweist als das erste Einsatzmaterial. Ein Teil des zweiten Einsatzmaterials kann auch dem ersten Einsatzmaterial stromauf der ersten Reformiereinheit zugespeist werden.

Ausgestaltungen des vorgeschlagenen Verfahrens können also die Verwendung zweier Einsatzmaterialien, die sich im Gehalt von Methan und Kohlenwasserstoffen mit mehr als zwei Kohlenstoffatomen und/oder Kohlendioxid unterscheiden, umfassen. Alternativ dazu können aber die zwei Einsatzmaterialien auch dieselben Gehalte an Methan und an Kohlenwasserstoffen mit zwei und mehr Kohlenstoffatomen und/oder an Kohlendioxid aufweisen. Die beiden Einsatzmaterialien können beispielsweise als Teilströme eines gemeinsamen Ausgangsstroms bereitgestellt werden. In letzterem Fall wird ein Teilstrom in die erste Reformiereinheit geleitet und teilweise umgesetzt, ein zweiter Teilstrom dagegen vor die zweite Reformiereinheit. Insgesamt ist ein niedrigerer Dampfgehalt notwendig, als wenn das komplette Einsatzmaterial in die erste Reformereinheit eingespeist wird.

Das vorgeschlagene Verfahren ermöglicht insbesondere dann, wenn die Einsatzmaterialien unterschiedlich sind, eine Erweiterung des Einsatzes von Rohstoffen mit höherem Kohlenwasserstoff- und/oder Kohlendioxidgehalt in der zweiten Reformiereinheit bei gleichzeitiger Beibehaltung eines geringeren Dampfbedarfs für die gesamte Reformieranordnung ohne Koks- bzw. Kohlenstoffbildung. Die Kohlendioxidemissionen je erzeugter Menge an Wasserstoffprodukt werden reduziert, wenn erneuerbarer Strom zum Heizen verwendet wird. Jegliche Kohlendioxidemissionen aus dem Rauchgas werden vermieden, es ist keine Verbrennung von beispielsweise Erdgas oder Restgas aus einer Druckwechseladsorption erforderlich.

Da weder Erdgas noch Restgas aus einer Druckwechseladsorption verbrannt werden muss, ist kein spezieller Ofen erforderlich, wodurch kompaktere Reformieranordnungen als im Stand der Technik möglich sind. Da kein Rauchgas erzeugt wird, ist kein Entstickungssystem erforderlich. Dies verbessert die Erstellungsund Betriebskosten eines entsprechenden Systems und vermeidet die Handhabung von Chemikalien für das Entstickungssystem. Wärmeverluste aus dem Rauchgas werden eliminiert.

Durch die Injektion von Kohlenwasserstoffen und/oder Kohlendioxid stromab der ersten und stromauf der zweiten Reformiereinheit, wo der Wasserstoffpartialdruck bereits erhöht ist, wird insgesamt weniger Dampf am Eintritt in die nachgeschaltete Reformiereinheit benötigt. Auf diese Weise wird die Energieeffizienz erhöht und die Erstellungs- und Betriebskosten Anlage werden gesenkt. Beispielsweise kann in hier vorgeschlagenen Ausgestaltungen mehr Dampf exportiert werden, als dies in konventionellen Verfahren möglich ist.

In Ausgestaltungen des vorgeschlagenen Verfahrens kann vorgesehen sein, dass das erste Einsatzmaterial zu mehr als 80 Prozent Methan und weniger als 20 Prozent Kohlendioxid aufweist und das zweite Einsatzmaterial zu mehr als 2 Prozent der Kohlenwasserstoffe mit zwei und mehr Kohlenstoffatomen und/oder Kohlendioxid aufweist. Bei derartigen Gehalten entfalten sich die Vorteile des vorgeschlagenen Verfahrens in besonderer Weise. Gewisse Gehalte an Kohlenwasserstoffen mit zwei und mehr Kohlenstoffatomen und/oder Kohlendioxid sind dabei auch in dem ersten Einsatzmaterial nicht abträglich. Dieses kann entsprechende Komponenten in einer Konzemtration von weniger als 10 Prozent enthalten oder im Wesentlichen frei hiervon sein.

In Ausgestaltungen des vorgeschlagenen Verfahrens kann vorgesehen sein, dass mehr als 8 Prozent der Kohlenwasserstoffe mit zwei und mehr Kohlenstoffatomen Kohlenwasserstoffe mit genau zwei Kohlenstoffatomen sind. Entsprechende Gehalte sind beispielsweise für Naphtha typisch.

In Ausgestaltungen des vorgeschlagenen Verfahrens kann vorgesehen sein, dass das erste Einsatzmaterial Erdgas ist oder unter Verwendung von Erdgas bereitgestellt wird. Erdgas wird in den hier vorgeschlagenen Ausgestaltungen effektiver genutzt, da vorzugsweise keine Anteile hiervon zur Beheizung verwendet werden. Daher ist die Produktausbeute je Kohlenstoffanteil besser.

In Ausgestaltungen des vorgeschlagenen Verfahrens kann vorgesehen sein, dass das zweite Einsatzmaterial Flüssiggas, Naphtha und/oder eine Raffineriefraktion ist oder unter Verwendung hiervon bereitgestellt wird. Auch eine Kombination entsprechender Mischungen kann vorgesehen sein. Insbesondere kann dabei der erste Einsatzstrom nur unter Verwendung des ersten und ohne Verwendung des zweiten Einsatzmaterials bereitgestellt werden, wenn diese unterschiedlich sind, so dass die Gehalte an schwereren Kohlenwasserstoffen und/oder Kohlendioxid in dem zweiten Einsatzmaterial begrenzt sind.

In Ausgestaltungen des vorgeschlagenen Verfahrens kann vorgesehen sein, dass die Reformieranordnung mehr als zwei seriell angeordnete, zur Dampfreformierung eingerichtete Reformiereinheiten aufweist, wobei zwischen jeweils zwei aufeinander folgenden Reformiereinheiten ein kohlenstoffhaltiges Einsatzmaterial zugeführt wird. Hierbei lassen sich die jeweiligen Betriebsbedingungen beispielsweise in besonders vorteilhafter Weise auf die jeweiligen Einsätze abstimmen.

In Ausgestaltungen des vorgeschlagenen Verfahrens kann vorgesehen sein, dass die Reformieranordnung ein Reformierreaktor ist und die erste Reformiereinheit und die zweite Reformiereinheit Abschnitte des Reformierreaktors darstellen. Ein Reaktor zeichnet sich dabei insbesondere durch eine Außenhülle aus, die die erste und die zweite Reformiereinheit umschließt.

In Ausgestaltungen des vorgeschlagenen Verfahrens kann vorgesehen sein, dass die erste Reformiereinheit und/oder die zweite Reformiereinheit unter Verwendung von elektrischem Strom beheizt werden, wie bereits mehrfach erwähnt. Der elektrische Strom kann dabei zumindest zum Teil und/oder zumindest zeitweise als regenerativ erzeugter elektrischer Strom bereitgestellt werden.

In Ausgestaltungen des vorgeschlagenen Verfahrens kann vorgesehen sein, dass der erste Einsatzstrom unter Verwendung von Dampf gebildet wird, der der Reformieranordnung an einer Position stromauf der ersten Reformiereinheit zugespeist wird, und dass der zweite Einsatzstrom unter Verwendung von weiterem Dampf gebildet wird, der der Reformieranordnung an einer Position stromab der ersten Reformiereinheit und stromauf der zweiten Reformiereinheit zugespeist wird. Auf diese Weise ist eine gezielte Anpassung an den Dampfbedarf möglich und die erste Reformiereinheit kann für kleinere Dampfmengen ausgelegt werden.

Die vorgeschlagene Anlage zur Herstellung eines zumindest Wasserstoff enthaltenden Verfahrensprodukts weist eine Reformieranordnung mit einer ersten zur Dampfreformierung eingerichteten Reformiereinheit und einer, zur ersten seriell angeordneten zweiten zur Dampfreformierung eingerichteten Reformiereinheit auf.

Die Anlage ist zum Einspeisen eines ersten Einsatzstroms in die erste Reformiereinheit und zum Einspeisen eines zweiten Einsatzstroms in die zweite Reformiereinheit eingerichtet. Ferner ist die Anlage zum Bilden des ersten Einsatzstroms unter Verwendung eines ersten Einsatzmaterials eingerichtet. Sie ist außerdem zum Bilden des zweiten Einsatzstrom unter Verwendung eines zweiten Einsatzmaterials und eines Gasgemischs, das der ersten Reformiereinheit entnommen wird, eingerichtet. Zudem ist die Anlage zum Zuspeisen des zweiten Einsatzmaterial in die Reformieranordnung an einer Position stromab der ersten Reformiereinheit und stromauf der zweiten Reformiereinheit eingerichtet, sowie dafür, das zweite Einsatzmaterial mit demselben oder einem geringeren Gehalt an Methan und demselben oder einem höheren Gehalt an Kohlenwasserstoffen mit zwei und mehr Kohlenstoffatomen und/oder an Kohlendioxid als das erste Einsatzmaterial bereitzustellen.

Vorteile und Merkmale, die bezüglich des vorgeschlagenen Verfahrens und seinen Ausgestaltungen beschrieben wurden, gelten auch für die vorgeschlagene Anlage und umgekehrt. Diese werden entsprechend nur einmalig beschrieben, und auf die jeweiligen Erläuterungen kann verwiesen werden.

Entsprechendes gilt auch für eine Anlage, die dazu eingerichtet sein kann, ein Verfahren gemäß einer beliebigen Ausgestaltung durchzuführen.

### Zeichnungen

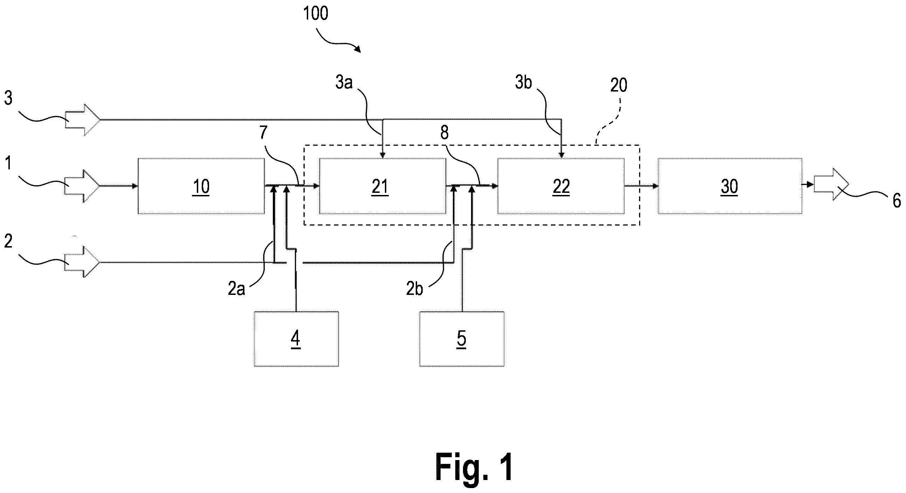

Im Rahmen der vorliegenden Offenbarung vorgeschlagene Aspekte werden anhand eines in Figur 1 schematisch dargestellten Ausführungsbeispiele näher erläutert. Dabei zeigt
Figur 1 eine Ausgestaltung einer vorgeschlagenen Anlage.

Wie eingangs erwähnt, basiert die Wasserstoff- und Synthesegasproduktion derzeit hauptsächlich auf der Dampfreformierung von Kohlenwasserstoffen. Um die endotherme Reformierungsreaktion anzutreiben, ist Hochtemperaturwärme erforderlich, worunter hier insbesondere Wärme auf einem Temperaturniveau von 500 bis 1.500 °C, beispielsweise von 800 bis 1.200 °C, verstanden werden soll. Da die Hochtemperaturwärme herkömmlicherweise durch die Verbrennung von Kohlenwasserstoffen mit Luft bereitgestellt wird, entstehen bei der Herstellung von Wasserstoff erhebliche Kohlendioxidemissionen. Da bei der Verwendung von schweren Kohlenwasserstoffen oder Kohlendioxid im Einsatz der Dampfreformierung, typischerweise Erdgas, die Gefahr der Kohlenstoffbildung besteht, sind in solchen Fällen vergleichsweise große Mengen an Verdünnungsdampf erforderlich, um die Kohlenstoffbildung zu unterdrücken.

Wird Wasserstoff unter Verwendung von erneuerbaren Energiequellen erzeugt, beispielsweise durch Elektrolyse von Wasser unter Verwendung von Solar- oder Windstrom, handelt es sich um sogenannten grünen Wasserstoff. Von blauem Wasserstoff spricht man, wenn die Herstellung zwar auf Basis fossiler Einsatzstoffe erfolgt, beispielsweise durch Reformierung von Erdgas, jedoch bei der Herstellung anfallendes Kohlendioxid abgetrennt und sequestriert oder anderweitig verwendet wird. Klassisch, d.h. ohne derartige Maßnahmen, hergestellter Wasserstoff wird auch als grauer Wasserstoff bezeichnet. Hier vorgeschlagene Ausgestaltungen betreffen insbesondere die Herstellung von blauem Wasserstoff und können daher eine Abtrennung von Kohlendioxid zu dessen Sequestrierung oder anderweitiger Verwendung umfassen. Man verwendet hierfür auch die englischen Begriffe "Carbon Capture and Storage" (CCS) bzw. "Carbon Capture and Utilization" (CCU).

In einer konventionellen, kohlenwasserstoffbasierten Dampfreformierung wird die endotherme Reformierungsreaktion also durch externe Beheizung angetrieben, z.B. durch Verbrennung eines Gemischs aus Erdgas und einem Abgas aus der Produktreinigung, insbesondere aus einer Druckwechseladsorption. Infolgedessen entsteht Kohlendioxid nicht nur als Nebenprodukt bei der Synthesegaserzeugung selbst (d.h. durch die Umsetzung eines Moleküls Methan mit zwei Molekülen Wasser zu vier Molekülen Wasserstoff und einem Molekül Kohlendioxid), sondern auch bei der Verbrennung von Kohlenwasserstoffen zum Antrieb der endothermen Reaktionen durch eine entsprechende Oxidationsreaktion.

Wenn Kohlendioxid aus diesem Rauchgas für die Sequestrierung oder Verwendung abgetrennt werden soll, ist eine komplexe und kostenintensive Abscheidungstechnologie erforderlich. Grund dafür ist, dass das Rauchgas auf vergleichsweise niedrigem Druck vorliegt und vergleichsweise hohe Volumenströme mit niedrigen Konzentrationen an Kohlendioxid zu bearbeiten sind. Ferner sind in den typischerweise eingesetzten absorptiven Wäschen häufig nicht unbeträchtliche Waschmittelverluste an die Atmosphäre zu verzeichnen.

Kohlendioxid im Rauchgas lässt sich vermeiden, wenn die Reaktionswärme für die Dampfreformierung durch elektrische Beheizung, insbesondere mit erneuerbarem elektrischem Strom, bereitgestellt wird. Auf diese Weise können die Kohlendioxidemissionen, die durch die Wärmezufuhr aus der Verbrennung von Heizgas verursacht werden, vermieden und der Gesamtverbrauch von Kohlenwasserstoffen (Heizgas und Einsatz für die Dampfreformierung) reduziert werden. Die Reduzierung bewegt sich bei der Verwendung von Erdgas beispielsweise in einer Größenordnung von ca. 20% des konventionellen Einsatzmaterials.

Der Gehalt an schweren Kohlenwasserstoffen und/oder Kohlendioxid im Einsatzmaterial, wie beispielsweise bei der Verwendung von sogenanntem schweren Erdgas, Flüssiggas, Naphtha und/oder Abgas aus anderen Anlagen der Fall, hat einen Einfluss auf die Tendenz zur Kohlenstoffbildung im Reformierungsreaktor. Um der Tendenz zur Kohlenstoffbildung entgegenzuwirken bzw. diese zu unterdrücken, werden höhere Dampfmengen eingesetzt oder ein Vorreformer installiert. Diese Optionen erhöhen die Betriebs- und Investitionskosten.

In einigen Fällen wird ein Stoffstrom, der schwere Kohlenwasserstoffe oder Erdgas mit einem erhöhten Gehalt an Kohlenwasserstoffen schwerer als Methan enthält, typischerweise ein Abgas aus einer anderen Anlage bzw. Raffinerie, mit einem erdgasbasierten Einsatzmaterial vermischt. In Fällen, in denen ein Synthesegas mit hohem Verhältnis von Kohlenmonoxid zu Wasserstoff bevorzugt wird, kann die Beimischung von Kohlendioxid vorteilhaft sein, um die Bildung von Kohlenmonoxid zu erhöhen (sogenannte Trockenreformierung).

Die Kohlenstoffbildung muss unter allen Umständen vermieden werden, um eine Deaktivierung des Katalysators und Rußbildung zu verhindern. Kohlenstoff kann nur durch eine Dampfbehandlung (was zu beträchtlichen Produktionsverlusten während entsprechender Zeiträume führt) oder durch einen vollständigen Austausch des Katalysators entfernt werden, was noch schwerwiegendere Auswirkungen auf das Produktionsschema und die Kosten hat.

Hier vorgeschlagene Ausgestaltungen umfassen Lösungen unter Verwendung einer elektrisch beheizten Dampfreformierung mit schrittweiser Zugabe von schweren Kohlenwasserstoffen oder Kohlendioxid. Die erforderliche Wärme für die Reformierungsreaktion wird durch elektrische Beheizung bereitgestellt. Elektrisch beheizte Reaktoren zur Dampfreformierung sind ausgesprochen kompakt. Wenn ein elektrisch beheizter Reaktor zur Dampfreformierung verwendet und in mehrere hintereinandergeschaltete Abschnitte unterteilt wird, können der Wärmeeintrag und die Zusammensetzung des Speisegases zwischendurch angepasst werden, um einen stabilen und energieeffizienten Betrieb zu erreichen.

Im Rahmen der hier vorgeschlagenen Ausgestaltungen wird eine Reformieranordnung verwendet, die mindestens zwei seriell angeordnete Reformiereinheiten aufweist, wobei vorliegend unter einer "Reformiereinheit" ein eigenständiger Reformierreaktor oder ein Abschnitt eines Reformierreaktors verstanden wird und ein "Abschnitt" insbesondere durch eine Zwischeneinspeisung in den Reformierreaktor definiert ist. Jede Reformiereinheit weist Reaktionsrohre auf, die mit einem geeigneten Katalysator ausgestattet sind und elektrisch beheizt werden. Zur Zwischeneinspeisung kann in den Reaktionsrohren einer Reformiereinheit strömendes Prozessgas zusammengeführt werden, beispielsweise über einen Rohrboden und einen entsprechenden Sammler, und die Zwischeneinspeisung kann in das gesammelte Gas erfolgen. Ein dabei erhaltenes Gasgemisch kann dann wieder auf Reaktionsrohre der nachfolgenden Reformiereinheit verteilt werden. Auch andere Arten der Zwischeneinspeisung können in hier vorgeschlagenen Ausgestaltungen vorgesehen sein.

Figur 1 veranschaulicht eine Anlage gemäß einer hier vorgeschlagenen Ausgestaltung in Form eines vereinfachten Blockdiagramms. Die Anlage ist insgesamt mit 100 bezeichnet. Sie umfasst eine Einsatzvorbehandlungseinheit 10 und eine Reformieranordnung 20, die zwei seriell angeordnete, elektrisch beheizte Reformiereinheiten aufweist, die hier auch als erste Reformiereinheit 21 und zweite Reformiereinheit 22 bezeichnet werden. Der Reformieranordnung 20 sind ein oder mehrere Einheiten 30 zur Produktaufbereitung nachgeschaltet, die beispielsweise eine oder mehrere Wassergaskonvertierungseinheiten, Produkttrenneinheiten, Aufreinigungseinheiten und dergleichen umfassen kann bzw. können.

Der Anlage 100 wird von einer Anlagengrenze ein Einsatzgas 1, beispielsweise Erdgas, zugeführt. Außerdem werden in der Anlage 100 Dampf 2 zur Verdünnung und Reformierung des Einsatzgases 1 sowie elektrischer Strom 3 verwendet. Der Dampf 2 wird dabei in Anteilen 2a und 2b der Reformiereinheit 21 und der Reformiereinheit 22 zugeführt bzw. mit einem jeweiligen Einsatz vermischt. Der elektrische Strom 3 wird in Anteilen 3a und 3b zur Beheizung der Reformiereinheiten 21, 22 verwendet. Aus der Anlage 100, genauer der einen oder den mehreren Produktaufbereitungseinheiten 30, wird ein wasserstoffhaltiges Verfahrensprodukt 6, beispielsweise Synthesegas oder hieraus aufgereinigter Wasserstoff, entnommen.

Mindestens zwei Reformiereinheiten 21, 22 befinden sich in hier vorgeschlagenen Ausgestaltungen also in einer seriellen Konfiguration. Auf diese Weise können Teile oder eine Gesamtmenge umzusetzender schwerer Kohlenwasserstoffe und/oder Kohlendioxid, in Figur 1 mit 4 und 5 bezeichnet, wobei es sich aber auch um Anteile eines gemeinsamen Einsatzes handeln kann, erst stromab der ersten Reformiereinheit 21 zugegeben werden. Wenngleich in Figur 1 also eine potentielle Einspeisung von Kohlendioxid und schweren Kohlenwasserstoffen vor der ersten Reformiereinheit 21 mit 4 veranschaulicht ist und eine Einspeisung von Kohlendioxid und schweren Kohlenwasserstoffen vor der zweiten Reformiereinheit 22 mit 5 veranschaulicht ist, ist die Menge vor der zweiten Reformiereinheit 22 typischerweise größer als vor der ersten Reformiereinheit und erfolgt ggf. auch nur dort. Dies hat den Vorteil, dass sich in der ersten Reformiereinheit 21 bereits Wasserstoff gebildet hat. Ein höherer Wasserstoffgehalt (Partialdruck) unterdrückt die Kohlenstoffbildung. Auf diese Weise kann dem System insgesamt ein höherer Gehalt an schweren Kohlenwasserstoffen und/oder Kohlendioxid 4, 5 zugeführt werden. Auch die Menge des Dampfs 2 kann auf die Anforderungen der einzelnen Reformiereinheiten zugeschnitten werden. Bei konventionell befeuerten Reformiereinheiten bzw. Reformieranordnungen ist es schwieriger, die Wärmezufuhr über die Länge des Reformerrohrs anzupassen, da eine mehrfache/seitliche Anordnung des Brennersystems erforderlich wäre. Eine gestaffelte Einspeisung über die Längen eines konventionellen Reformerrohrs ist nicht möglich.

Wie in Figur 1 veranschaulicht, wird also der ersten Reformiereinheit 21 ein erster Einsatzstrom 7 zugeführt, der unter Verwendung eines ersten Einsatzmaterials, im vorliegenden Fall mit Erdgas 1, gebildet wird, und er zweiten Reformiereinheit 22 wird ein zweiter Einsatzstrom 8 zugeführt, der unter Verwendung eines Gasgemischs, das der ersten Reformiereinheit 21 entnommen wird, und eines zweiten Einsatzmaterials, nämlich insbesondere der schweren Kohlenwasserstoffe und/oder des Kohlendioxids 5 gebildet wird, wobei das zweite Einsatzmaterial der Reformieranordnung 20 zwischen der ersten Reformiereinheit 21 und der zweiten Reformiereinheit 22 zugespeist wird.

Hier vorgeschlagene Ausgestaltungen können selbstverständlich mehrere Reformiereinheiten 21, 22 in Serie und/oder in Kombination mit einer parallelen Anordnung eingesetzt werden. Die vorgeschlagenen Ausgestaltungen sind, wie erwähnt, einsetzbar für die Produktion von Wasserstoff und Synthesegas.

## Patentansprüche

1. Verfahren zur Herstellung eines zumindest Wasserstoff enthaltenden Verfahrensprodukts (6) unter Verwendung einer Reformieranordnung (20) mit einer ersten zur Dampfreformierung eingerichteten Reformiereinheit (21) und einer, zur ersten seriell angeordneten zweiten zur Dampfreformierung eingerichteten Reformiereinheit (22),
wobei das Verfahren das Einspeisen eines ersten Einsatzstroms (7) in die erste Reformiereinheit (21) und das Einspeisen eines zweiten Einsatzstroms (8) in die zweite Reformiereinheit (22) umfasst,
wobei der erste Einsatzstrom (7) unter Verwendung eines ersten Einsatzmaterials (1) und der zweite Einsatzstrom (8) unter Verwendung eines zweiten Einsatzmaterials (5) sowie eines der ersten Reformiereinheit (21) entnommen Gasgemischs gebildet wird,
wobei zumindest ein Teil des zweiten Einsatzmaterials (5) der Reformieranordnung (20) an einer Position stromab der ersten Reformiereinheit (21) und stromauf der zweiten Reformiereinheit (22) zugespeist wird, und wobei das zweite Einsatzmaterial (5) denselben oder einen geringeren Gehalt an Methan und denselben oder einen höheren Gehalt an Kohlenwasserstoffen mit zwei und mehr Kohlenstoffatomen und/oder an Kohlendioxid aufweist als das erste Einsatzmaterial (1).

2. Verfahren nach Anspruch 1, wobei das erste Einsatzmaterial (1) zu mehr als 80 Prozent Methan und weniger als 20 Prozent aus Kohlendioxid besteht, und das zweite Einsatzmaterial (5) mehr als zwei Prozent Kohlenwasserstoffe mit zwei und mehr Kohlenstoffatomen und/oder Kohlendioxid aufweist.

3. Verfahren nach Anspruch 1 oder 2, wobei mehr als 8 Prozent der Kohlenwasserstoffe mit zwei und mehr Kohlenstoffatomen Kohlenwasserstoffe mit genau zwei Kohlenstoffatomen sind.

4. Verfahren nach einem der vorstehenden Ansprüche, wobei das erste Einsatzmaterial (1) Erdgas ist oder unter Verwendung von Erdgas bereitgestellt wird.

5. Verfahren nach einem der vorstehenden Ansprüche, wobei das zweite Einsatzmaterial (5) Flüssiggas, Naphtha und/oder eine Raffineriefraktion ist oder unter Verwendung hiervon bereitgestellt wird.

6. Verfahren nach einem der vorstehenden Ansprüche, wobei der erste Einsatzstrom (7) nur unter Verwendung des ersten Einsatzmaterials (1) bereitgestellt wird.

7. Verfahren nach einem der vorstehenden Ansprüche, wobei die Reformieranordnung (20) mehr als zwei seriell angeordnete, zur Dampfreformierung eingerichtete Reformiereinheiten aufweist, wobei zwischen jeweils zwei aufeinander folgenden Reformiereinheiten ein kohlenstoffhaltiges Einsatzmaterial zugeführt wird.

8. Verfahren nach einem der vorstehenden Ansprüche, wobei die Reformieranordnung (20) ein Reformierreaktor ist und die erste Reformiereinheit (21) und die zweite Reformiereinheit (22) Abschnitte des Reformierreaktors darstellen.

9. Verfahren nach einem der vorstehenden Ansprüche, wobei die erste Reformiereinheit (21) und/oder die zweite Reformiereinheit (22) unter Verwendung von elektrischem Strom (3) beheizt werden.

10. Verfahren nach Anspruch 9, bei dem der elektrische Strom (3) zumindest zum Teil und/oder zumindest zeitweise als regenerativ erzeugter elektrischer Strom bereitgestellt wird.

11. Verfahren nach einem der vorstehenden Ansprüche, wobei der erste Einsatzstrom (7) unter Verwendung von Dampf (2a) gebildet wird, der der Reformieranordnung (20) an einer Position stromauf der ersten Reformiereinheit (21) zugespeist wird, und wobei der zweite Einsatzstrom (8) unter Verwendung von weiterem Dampf (2b) gebildet wird, der der Reformieranordnung (20) an einer Position stromab der ersten Reformiereinheit (21) und stromauf der zweiten Reformiereinheit (22) zugespeist wird.

12. Anlage (100) zur Herstellung eines zumindest Wasserstoff enthaltenden Verfahrensprodukts (6), die eine Reformieranordnung (20) mit einer ersten, zur Dampfreformierung eingerichteten Reformiereinheit (21) und einer zweiten, zur Dampfreformierung eingerichteten Reformiereinheit (22) aufweist,
wobei die Anlage (100) zum Einspeisen eines ersten Einsatzstroms (7) in die erste Reformiereinheit (21) und zum Einspeisen eines zweiten Einsatzstroms (8) in die zweite Reformiereinheit (22) eingerichtet ist,
wobei die Anlage (100) zum Bilden des ersten Einsatzstroms (7) unter Verwendung eines ersten Einsatzmaterials (1) eingerichtet ist,
wobei die Anlage (100) zum Bilden des zweiten Einsatzstrom (8) unter Verwendung eines zweiten Einsatzmaterials (5) und eines Gasgemischs, das der ersten Reformiereinheit (21) entnommen wird, eingerichtet ist,
wobei die Anlage (100) zum Zuspeisen des zweiten Einsatzmaterial (5) in die Reformieranordnung (20) an einer Position stromab der ersten Reformiereinheit (21) und stromauf der zweiten Reformiereinheit (22) eingerichtet ist, und
wobei die Anlage (100) dafür eingerichtet ist, das zweite Einsatzmaterial (5) mit demselben oder einem geringeren Gehalt an Methan und demselben oder einem höheren Gehalt an Kohlenwasserstoffen mit zwei und mehr Kohlenstoffatomen und/oder an Kohlendioxid als das erste Einsatzmaterial (1) bereitzustellen.

13. Anlage (100) nach Anspruch 12, die Mittel aufweist, die zur Durchführung eines Verfahrens nach einem der Ansprüche 1 bis 11 eingerichtet sind.
